# EUROPÄISCHE PATENTSCHRIFT

(11) **EP 2 145 786 B1**
(45) Veröffentlichungstag und Bekanntmachung des Hinweises auf die Patenterteilung: **18.08.2010**
(21) Anmeldenummer: 09165518.3
(22) Anmeldetag: 15.07.2009
(51) Int. Cl.: B60H 1/00

(54) **Kampffahrzeug mit einer Kühlluftverteilung**
Combat vehicle with a distribution of cooling air
Véhicule de combat avec une répartition de l'air de refroidissement

(30) Priorität: 16.07.2008 DE 102008033458
(43) Veröffentlichungstag der Anmeldung: 20.01.2010
(73) Patentinhaber: Krauss-Maffei Wegmann GmbH & Co. KG, 80997 München (DE)
(72) Erfinder: Raczek, Matthias, 34270 Schauenburg (DE)
(74) Vertreter: Feder Walter Ebert

(56) Entgegenhaltungen:
- EP-A- 1 060 917
- DE-A1- 3 807 474
- DE-A1- 19 932 277
- US-A- 2 434 752

## Beschreibung

Die Erfindung betrifft ein Kampffahrzeug mit einer Fahrzeugwanne und einem in Azimut drehbar zur Fahrzeugwanne gelagerten Geschützturm, der somit verschiedene Drehstellungen einnehmen kann. Ein solches Fahrzeug wird beispielsweise in der DE 3807474 A1 und der DE 19932277 A1 beschrieben. Für den Einsatz in wärmeren Regionen kann das Fahrzeug einen Kühllufterzeuger, wie einen Wärmetauscher, aufweisen, der entweder wannenfest oder turmfest im Fahrzeug angeordnet ist. Wannenfest im Sinne der Erfindung bedeutet hierbei, dass keine Relativbewegung zur Fahrzeugwanne bei einer Turmbewegung vorliegt. Turmfest im Sinne der Erfindung bedeutet, dass keine Relativbewegung zum Geschützturm bei einer Turmdrehung vorliegt. Neben dem Kühllufterzeuger weisen bekannte Fahrzeuge eine an den Kühllufterzeuger angeschlossene Luftverteilung auf, wobei diese im Falle eines turmfesten Kühllufterzeugers als turmfeste Turm-Luftverteilung und im Falle eines wannenfesten Kühllufterzeugers als wannenfeste Wannen-Luftverteilung ausgestaltet ist.

Es sind Fahrzeuge bekannt, bei denen der Geschützturm neben der Waffe auch einen in die Fahrzeugwanne hineinragenden und dort rotierenden Turmkorb aufweist, wie dies beispielsweise in der DE 19932277 A1 beschrieben ist. In dem Turmkorb können neben beispielsweise elektronischen Vorrichtungen auch Sitze für die Fahrzeugbesatzung vorgesehen sein, beispielsweise für den Kommandanten und den Richtschützen. Falls ein wannenfester Kühllufterzeuger im Kampffahrzeug installiert ist, kann bei einer rein wannenfesten Wannen-Luftverteilung die Kühlluft nicht in ausreichender Weise in den Geschützturm bzw. den Turmkorb geführt werden, so dass die dort befindlichen Geräte und Personen nicht in ausreichendem Maße mit Kühlluft versorgt werden. Dieser Nachteil wird dadurch verstärkt, dass bei wannenfesten Kühlanlagen die gekühlte Luft nicht in den Geschützturm aufsteigt, sondern im unteren Bereich des Fahrzeugs bleibt. In entsprechender Weise besteht bei turmfesten Kühllufterzeugern das Problem, dass die Mannschaft in der Fahrzeugwanne nicht ausreichend mit Kühlluft versorgt werden kann. EP 1 060 917 offenbart ein Kampffahrzeug nach dem Oberbegriff des Anspruchs 1.

Es ist die Aufgabe der Erfindung, ein Kampffahrzeug der eingangs genannten Art bereitzustellen, in welchem sowohl der Geschützturm als auch die Fahrzeugwanne in ausreichender Weise mit Kühlluft versorgt werden können.

Die Erfindung löst die Aufgabe mit den Merkmalen aus dem kennzeichnenden Teil des Patentanspruchs 1. Vorteilhafte Weiterbildungen sind Bestandteil der abhängigen Ansprüche.

Ein Grundgedanke der Erfindung liegt darin, das Fahrzeug derart auszugestalten, dass in einer Übergabe-Drehstellung des Geschützturms zur Fahrzeugwanne eine Öffnung der Wannen-Luftverteilung einer Öffnung der Turm-Luftverteilung zur Übergabe der vom Kühllufterzeuger erzeugten Kühlluft gegenübersteht. Auf diese Art wird eine Rotationsübergabestelle erzeugt, so dass bei einem wannenfesten Kühllufterzeuger mittels dieser Übergabestelle die Kühlluft in eine turmfeste Turm-Luftverteilung und bei einem turmfesten Kühllufterzeuger die Kühlluft in eine wannenfeste Wannen-Luftverteilung geleitet werden kann. Die Wannen-Luftverteilung und/oder die Turm-Luftverteilung können hierbei Luftkanäle, insbesondere Schläuche und/oder Rohre, zur Leitung und Verteilung der Luft umfassen.

Bevorzugt ist hierbei die Öffnung der Wannen-Luftverteilung oder der Turm-Luftverteilung als Luftübergabestutzen, insbesondere als Rohrstutzen, ausgestaltet, wobei die gegenüberliegende Öffnung als entsprechend ausgebildetes, insbesondere elastisches Anschlusselement ausgestaltet ist. Somit kann ein größerer Kühlluftverlust an der Übergabestelle vermieden werden. Dieser Vorteil kann dadurch verstärkt werden, dass das Anschlusselement in der Übergabe-Drehstellung den Luftübergabestutzen dichtend umfasst. Bevorzugt kann das Anschlusselement hierbei als Dichtmanschette oder Bürstendichtung ausgestaltet sein. Um Beschädigungen der Luftübergabestelle bei einer Drehbewegung des Geschützturms zu vermeiden, kann das Anschlusselement aus Schaumstoff oder elastischem Kunststoff bestehen. Bevorzugt weisen die sich gegenüberstehenden Öffnungen zudem im Wesentlichen die gleiche Öffnungsfläche auf, so dass wiederum Kühlluftverluste vermieden werden können.

Bei einer besonders bevorzugten Ausgestaltung umfasst im Falle einer turmfesten Kühllufterzeugung die Wannenverteilung und im Falle einer wannenfesten Kühllufterzeugung die Turm-Luftverteilung eine aktive Ansaugvorrichtung. Die Ansaugvorrichtung dient hierbei nicht nur dazu, in der Übergabe-Drehstellung des Geschützturmes die Kühlluft vom Kühllufterzeuger anzusaugen, sondern auch dazu, Luft anzusaugen, wenn sich der Geschützturm nicht in der Übergabe-Drehstellung, d. h. in einer Nicht-Übergabe-Drehstellung, befindet, so dass zwar keine Kühlluft vom Kühllufterzeuger angesaugt wird, jedoch trotzdem eine Luftumverteilung im Fahrzeug, insbesondere durch Ansaugen von kühlerer Luft aus dem unteren Bereich des Innenraums und Leitung dieser Luft in den oberen Bereich des Fahrzeugs, möglich ist.

Bevorzugt stellt die Übergabe-Drehstellung des Geschützturmes die Index-Stellung des Geschützturmes dar. Als Index-Stellung im Sinne der Erfindung wird die Drehstellung des Geschützturmes verstanden, welche im Normalbetrieb, beispielsweise beim Fahren des Fahrzeugs, eingenommen wird. Die Index-Stellung ist insbesondere die Stellung, in welcher das Geschützrohr des Geschützturmes parallel zur Fahrzeugfahrtrichtung ausgerichtet ist.

Bevorzugt weist die Turm-Luftverteilung mindestens eine Austrittsöffnung auf, mittels welcher die Kühlluft in den oberen Bereich des Geschützturmes bringbar ist. Bei einer besonders bevorzugten Ausgestaltung, bei welcher der Geschützturm einen Turmkorb aufweist, weist die Turm-Luftverteilung mindestens eine Austrittsöffnung auf, mittels welcher die Kühlluft in die obere Hälfte des Turmkorbs bringbar ist. Somit kann die Warmluft, die sich ansonsten im oberen Bereich des Turmkorbes oder des Geschützturmes anstaut, umgewälzt werden. Bevorzugt ist die Turm-Luftverteilung des Weiteren derart ausgestaltet, dass sie die Kühlluft zu mindestens zwei Orten im Geschützturm leitet. Hierzu kann die Turm-Luftverteilung bevorzugt ein Y-Rohrstück umfassen.

Ein bevorzugtes Ausführungsbeispiel der Erfindung wird anhand der Figuren 1 bis 8 beschrieben. Es zeigen:
- Fig. 1: ein Kampffahrzeug;
- Fig. 2a: das Kampffahrzeug nach Fig. 1 in der Draufsicht in einer schemati- schen Darstellung;
- Fig. 2b: das Kampffahrzeug nach Fig. 1 in einer schematischen Rückansicht;
- Fig. 3: eine Wannen-Luftverteilung des Kampffahrzeuges nach Fig. 1;
- Fig. 4: die Wannen-Luftverteilung nach Fig. 3 in einer gedrehten Ansicht;
- Fig. 5: ein Element der Turm-Luftverteilung des Fahrzeugs nach Fig. 1;
- Fig. 6: das Element der Turm-Luftverteilung gemäß der Ansicht A aus Fig. 5;
- Fig. 7: ein Luftführungssystem mit der Wannen-Luftverteilung gemäß Fig. 3 und einer Turm-Luftverteilung umfassend das Element aus Fig. 5; und
- Fig. 8: das Luftführungssystem aus Fig. 7 in einer gedrehten Ansicht.

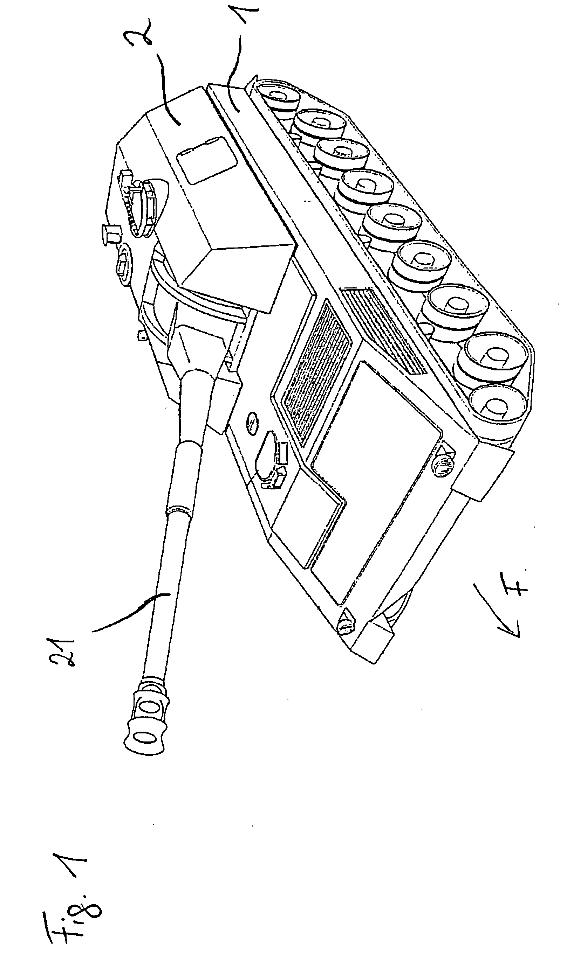

Die Fig. 1 zeigt ein als Panzerhaubitze ausgestaltetes Kampffahrzeug mit einer Fahrzeugwanne 1 und einem in der Fahrzeugwanne in Azimut drehbar gelagerten Geschützturm 2, welcher eine Waffe mit einem Waffenrohr 21 aufweist. Der Geschützturm 2 befindet sich in der Index-Stellung, in welcher das Waffenrohr 21 parallel zur Fahrzeugfahrtrichtung F ausgerichtet ist. Die Index-Stellung wird im Regelfalle nur dann verlassen, wenn sich das Kampffahrzeug im Kampfeinsatz befindet.

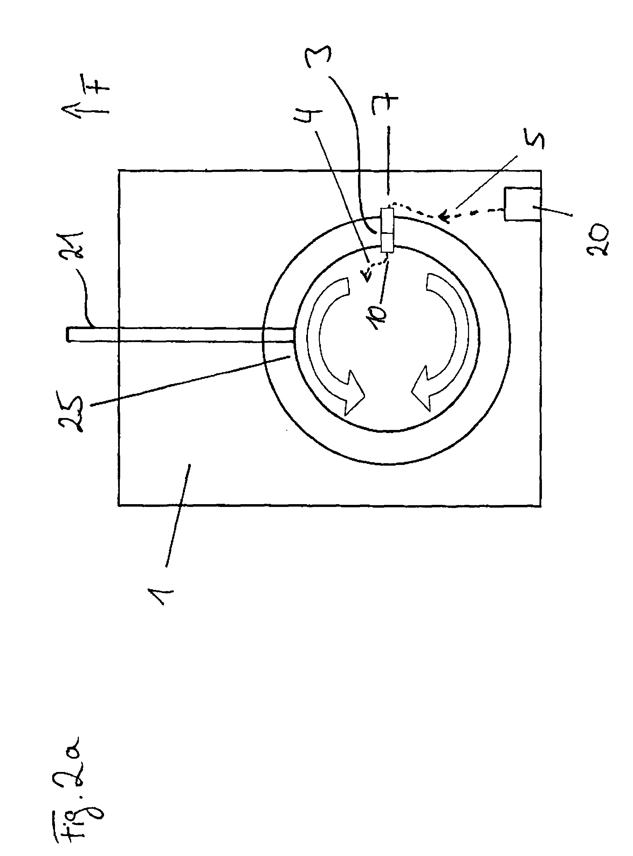

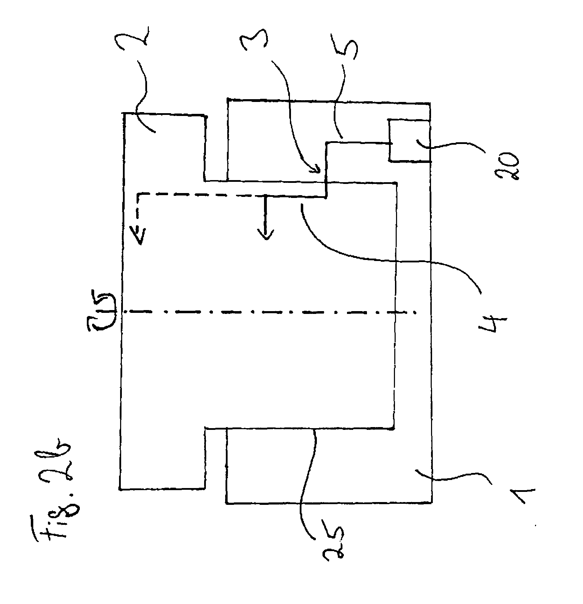

Die Figuren 2a und 2b zeigen das Kampffahrzeug in einer schematischen Darstellung. Der Geschützturm 2 weist einen Turmkorb 25 auf, der in die Fahrzeugwanne 1 hineinragt und entsprechend dem in der DE 19932277 A1 beschriebenen Turmkorb ausgestaltet sein kann. Der Turmkorb 25 rotiert somit in der Fahrzeugwanne 1, wobei zwischen der Rotationskontur des Turmkorbs 25 ein definierter Abstand zur Fahrzeugwanne 1 vorgegeben ist.

In der Fahrzeugwanne 1 ist ein wannenfester Kühllufterzeuger 20 angeordnet. An den Kühllufterzeuger 20 ist eine wannenfeste Wannen-Luftverteilung 5 angeschlossen, welche die Kühlluft zu einer Luftübergabestelle 3 führt, an welcher sich eine Öffnung 7 der Wannen-Luftverteilung 5 und eine Öffnung 10 einer turmfesten Turm-Luftverteilung 4 gegenüberstehen, so dass die Kühlluft vom Kühllufterzeuger 20 in den Geschützturm 2, insbesondere zu verschiedenen Stellen, eingebracht werden kann, wenn sich der Geschützturm in der in den Figuren 1, 2a und 2b dargestellten Übergabe-Drehstellung befindet, welche der Index-Stellung des Fahrzeugs entspricht. Die Luftübergabestelle 3 überbrückt somit den Zwischenraum zwischen der wannenseitigen und der turmseitigen Rotationskontur.

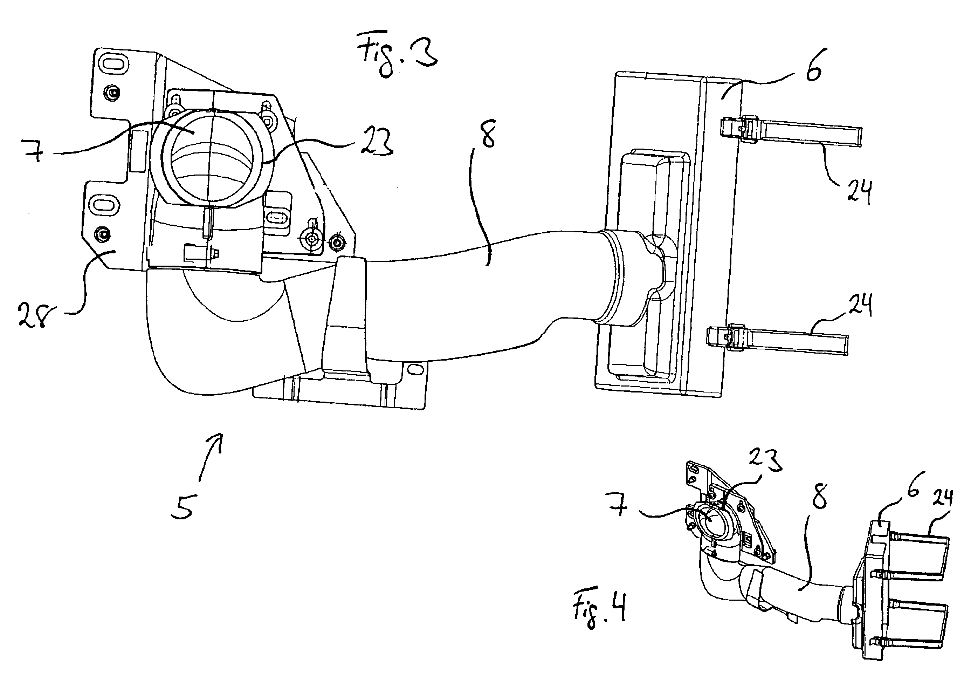

Die Figuren 3 und 4 zeigen eine mögliche Ausgestaltung einer Wannen-Luftverteilung 5. Die Wannen-Luftverteilung 5 weist hierbei ein Aufsatzelement 6 auf, welches mittels der Spanngurte 24 auf den Kühllufterzeuger 20 aufsetzbar ist. An das Aufsatzelement 6 angeschlossen ist ein Rohr 8, welches die Kühlluft zu einem Luftübergabestutzen 23 führt, welcher die Öffnung 7 der Wannen-Luftverteilung 5 aufweist und welcher über eine Montageplatte 28 an der Fahrzeugwanne 1 befestigbar ist.

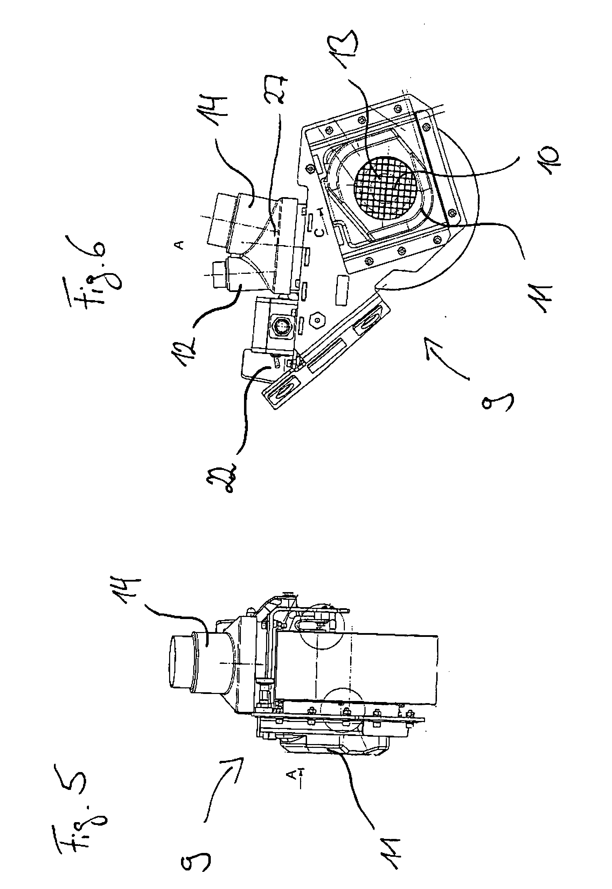

Die Figuren 5 und 6 zeigen eine Ansaugvorrichtung 9, welche ein Element der Turm-Luftverteilung 4 bildet. Die Ansaugvorrichtung 9 umfasst ein Anschlusselement 11, welches die Öffnung 10 umfasst und als elastische Dichtmanschette derart ausgestaltet ist, dass es formangepasst den Luftübergabestutzen 23 der Wannen-Luftverteilung 5 in der Dreh-Übergabestellung des Geschützturms 2 dichtend umfassen kann. Mittels der motorischen Ansaugvorrichtung 9, welche einen Radial-Lüfter umfasst, der über einen Schalter 22 ein- und ausschaltbar ist, kann die Kühlluft vom Kühllufterzeuger 20 über die Wannen-Luftverteilung 5 und den in die Öffnung 10 integrierten Staub-Filter 13 in die Turm-Luftverteilung 4 eingebracht werden. Die Ansaugvorrichtung 9 weist hierbei ein Y-Rohrstück 27 auf, so dass die Kühlluft in die einzelnen Rohrstücke 12 und 14 und somit zu zwei verschiedenen Orten im Turmkorb 25 geleitet werden kann.

Bei einer Drehung des Turms 2 wird er aus der Übergabe-Drehstellung in eine Nicht-Übergabe-Drehstellung im Sinne einer Trennstellung gebracht. Über die Ansaugvorrichtung 9 kann aber auch in der Trennstellung kühlere Luft aus dem unteren Bereich des Fahrzeugs in den Turm 2 gebracht werden.

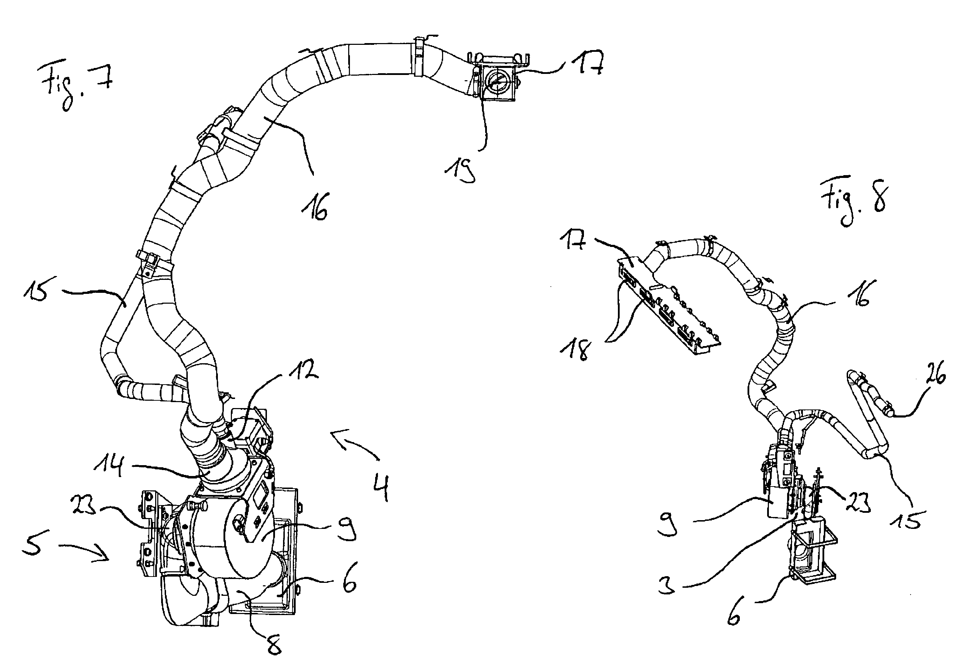

Die Figuren 7 und 8 zeigen das Luftverteilungssystem mit der Wannen-Luftverteilung 5 und der Turm-Luftverteilung 4. Die Turm-Luftverteilung 4 umfasst hierbei an die Rohrstücke 12 und 14 angeschlossene Schläuche 15 bzw. 16. Der Schlauch 16 führt zu einer Verteilvorrichtung 17, welche im oberen Bereich des Turmkorbs 25 angeordnet ist und vier Walzen-Lüfter 18 sowie einen Rundlüfter 19 aufweist, so dass insbesondere der Kopfbereich der im Turmkorb 25 angeordneten Besatzung zur Verbesserung des Wohlbefindens gekühlt wird.

Der Schlauch 15 führt mit einer Öffnung 26 zu einem im oberen Bereich des Geschützturms 2 angeordneten Waffenrechnersystem, welches somit mit Kühlluft versorgbar ist.

### Bezugszeichenliste:

- 1: Fahrzeugwanne
- 2: Geschützturm
- 3: Luftübergabestelle
- 4: Turm-Luftverteilung
- 5: Wannen-Luftverteilung
- 6: Aufsatzvorrichtung
- 7: Öffnung der Wannen-Luftverteilung
- 8: Rohr
- 9: Ansaugvorrichtung
- 10: Öffnung der Turm-Luftverteilung
- 11: Anschlusselement
- 12: Rohrstück
- 13: Filter
- 14: Rohrstück
- 15: Schlauch
- 16: Schlauch
- 17: Verteilvorrichtung
- 18: Walzen-Lüfter
- 19: Rundlüfter
- 20: Kühllufterzeuger
- 21: Geschützrohr
- 22: Schalter
- 23: Luftübergabestutzen
- 24: Gurte mit Ausraststücken
- 25: Turmkorb
- 26: Öffnung
- 27: Y-Rohrstück
- 28: Montageplatte

## Patentansprüche

1. Kampffahrzeug mit einer Fahrzeugwanne (1) und einem in Azimut drehbar zur Fahrzeugwanne (1) gelagerten Geschützturm (2), mit einem Kühllufterzeuger (20), einer turmfesten Turm-Luftverteilung (4) und einer wannenfesten Wannen-Luftverteilung (5), wobei der Kühllufterzeuger (20) wannenfest ist und an ihn die Wannen-Luftverteilung (5) angeschlossen ist oder wobei der Kühllufterzeuger (20) turmfest ist und an ihn die Turm-Luftverteilung (4) angeschlossen ist, **dadurch gekennzeichnet, dass** in einer Übergabe-Drehstellung des Geschützturms (2) eine Öffnung (7) der Wannen-Luftverteilung (5) einer Öffnung (10) der Turm-Luftverteilung (4) zur Übergabe der vom Kühllufterzeuger (20) erzeugten Kühlluft gegenübersteht.

2. Kampffahrzeug nach Anspruch 1, **dadurch gekennzeichnet, dass** die Öffnung (7) der Wannen-Luftverteilung (5) oder der Turm-Luftverteilung (4) als Luftübergabestutzen (23), insbesondere als Rohrstutzen, ausgestaltet ist, wobei die andere Öffnung (10) als entsprechend ausgebildetes, insbesondere elastisches, Anschlusselement (11) ausgestaltet ist.

3. Kampffahrzeug nach Anspruch 2, **dadurch gekennzeichnet, dass** das Anschlusselement (11) in der Übergabe-Drehstellung den Luftübergabestutzen (23) dichtend umfasst.

4. Kampffahrzeug nach Anspruch 2 oder 3, **dadurch gekennzeichnet, dass** das Anschlusselement (11) als Dichtmanschette ausgestaltet ist.

5. Kampffahrzeug nach einem der Ansprüche 2 bis 4, **dadurch gekennzeichnet, dass** Anschlusselement (11) aus Schaumstoff oder elastischem Kunststoff ist.

6. Kampffahrzeug nach einem der vorhergehenden Ansprüche, **dadurch gekennzeichnet, dass** die sich gegenüberstehenden Öffnungen (7, 10) im Wesentlichen die gleiche Öffnungsfläche aufweisen.

7. Kampffahrzeug nach einem der vorhergehenden Ansprüche, **dadurch gekennzeichnet, dass** bei einem turmfesten Kühllufterzeuger (10) die Wannen-Luftverteilung (5) und bei einem wannenfesten Kühllufterzeuger (10) die Turm-Luftverteilung (4) eine aktive Ansaugvorrichtung (9) umfasst.

8. Kampffahrzeug nach einem der vorhergehenden Ansprüche, **dadurch gekennzeichnet, dass** die Übergabe-Drehstellung die Indexstellung des Geschützturmes (2), in welcher insbesondere das Geschützrohr (21) parallel zur Fahrzeugfahrtrichtung (F) ausgerichtet ist, darstellt.

9. Kampffahrzeug nach einem der vorhergehenden Ansprüche, **dadurch gekennzeichnet, dass** die Turm-Luftverteilung (4) mindestens eine Austrittsöffnung (18, 19, 26) aufweist, mittels welcher die Kühlluft in den oberen Bereich des Geschützturms (2) bringbar ist.

10. Kampffahrzeug nach einem der vorhergehenden Ansprüche, **dadurch gekennzeichnet, dass** der Geschützturm (2) einen Turmkorb (25) aufweist, wobei die Turm-Luftverteilung (4) mindestens eine Austrittsöffnung (18, 19, 26) aufweist, mittels welcher die Kühlluft in den oberen Bereich des Turmkorbs (25) bringbar ist.

11. Kampffahrzeug nach einem der vorhergehenden Ansprüche, **dadurch gekennzeichnet, dass** mittels der Turm-Luftverteilung (4) die Kühlluft zu mindestens zwei Orten im Geschützturm (2) leitbar ist, insbesondere mittels eine Y-Rohrstücks.

12. Kampffahrzeug nach einem der vorhergehenden Ansprüche, **dadurch gekennzeichnet, dass** die Wannen-Luftverteilung (5) und/oder die Turm-Luftverteilung (4) Luftkanäle (8, 15, 16), insbesondere Schläuche und/oder Rohre, umfasst.

## Claims

1. Combat vehicle having a vehicle hull (1) and a gun turret (2) mounted rotatably in azimuth relative to the vehicle hull (1), having a cooling air generator (20), a turret-fixed turret air distribution device (4) and a hull-fixed hull air distribution device (5), wherein the cooling air generator (20) is hull-fixed and the hull air distribution device (5) is connected thereto or wherein the cooling air generator (20) is turret-fixed and the turret air distribution device (4) is connected thereto, **characterized in that** in a transfer rotary position of the gun turret (2) an opening (7) of the hull air distribution device (5) is positioned opposite an opening (10) of the turret air distribution device (4) for transferring the cooling air generated by the cooling air generator (20).

2. Combat vehicle according to claim 1, **characterized in that** the opening (7) of the hull air distribution device (5) or of the turret air distribution device (4) is configured as an air transfer connecting piece (23), in particular as a pipe socket, wherein the other opening (10) is configured as a correspondingly constructed, in particular flexible connection element (11).

3. Combat vehicle according to claim 2, **characterized in that** the connection element (11) in the transfer rotary position sealingly surrounds the air transfer connection piece (23).

4. Combat vehicle according to claim 2 or 3, **characterized in that** the connection element (11) is configured as a sealing collar.

5. Combat vehicle according to one of claims 2 to 4, **characterized in that** connection element (11) is made of foam material or flexible plastics material.

6. Combat vehicle according to one of the preceding claims, **characterized in that** the mutually opposed openings (7, 10) have substantially the same opening area.

7. Combat vehicle according to one of the preceding claims, **characterized in that**, in the case of a turret-fixed cooling air generator (10), the hull air distribution device (5) and, in the case of a hull-fixed cooling air generator (10), the turret air distribution device (4) comprises an active intake apparatus (9).

8. Combat vehicle according to one of the preceding claims, **characterized in that** the transfer rotary position is the index position of the gun turret (2), in which in particular the gun barrel (21) is aligned parallel to the vehicle direction of motion (F).

9. Combat vehicle according to one of the preceding claims, **characterized in that** the turret air distribution device (4) has at least one outlet opening (18, 19, 26), by means of which the cooling air may be brought into the upper region of the gun turret (2).

10. Combat vehicle according to one of the preceding claims, **characterized in that** the gun turret (2) comprises a turret basket (25), wherein the turret air distribution device (4) has at least one outlet opening (18, 19, 26), by means of which the cooling air may be brought into the upper region of the turret basket (25).

11. Combat vehicle according to one of the preceding claims, **characterized in that** by means of the turret air distribution device (4) the cooling air may be conveyed to at least two locations in the gun turret (2), in particular by means of a Y-pipe section.

12. Combat vehicle according to one of the preceding claims, **characterized in that** the hull air distribution device (5) and/or the turret air distribution device (4) comprises air channels (8, 15, 16), in particular flexible tubes and/or pipes.

## Revendications

1. Véhicule de combat avec un bac de véhicule (1) et une tourelle (2) qui peut tourner dans le sens des azimuts par rapport au bac de véhicule (1), avec un générateur d'air de refroidissement (20), une répartition de l'air de la tourelle (4) solidaire de la tourelle, et une répartition de l'air du bac (5) solidaire du bac, le générateur d'air de refroidissement (20) étant solidaire du bac et la répartition de l'air du bac (5) lui étant raccordée ou le générateur d'air de refroidissement (20) étant solidaire de la tourelle et la répartition de l'air de la tourelle (4) lui étant raccordée, **caractérisé en ce que** dans une position de rotation de transfert de la tourelle (2), une ouverture (7) de la répartition de l'air du bac (5) se trouve en face d'une ouverture (10) de la répartition de l'air de la tourelle (4) pour le transfert de l'air de refroidissement produit par le générateur d'air de refroidissement (20).

2. Véhicule de combat selon la revendication 1, **caractérisé en ce que** l'ouverture (7) de la répartition de l'air du bac (5) ou de la répartition de l'air de la tourelle (4) est configurée sous la forme d'une tubulure de transfert de l'air (23), en particulier sous la forme d'une tubulure cylindrique, l'autre ouverture (10) étant configurée sous la forme d'un élément de raccordement (11) de configuration correspondante, en particulier élastique.

3. Véhicule de combat selon la revendication 2, **caractérisé en ce que** dans la position de rotation de transfert, l'élément de raccordement (11) enserre la tubulure de transfert de l'air (23) en l'étanchant.

4. Véhicule de combat selon la revendication 2 ou 3, **caractérisé en ce que** l'élément de raccordement (11) est configuré sous la forme d'un manchon d'étanchéité.

5. Véhicule de combat selon l'une quelconque des revendications 2 à 4, **caractérisé en ce que** l'élément de raccordement (11) est en mousse ou en un plastique élastique.

6. Véhicule de combat selon l'une quelconque des revendications précédentes, **caractérisé en ce que** les ouvertures (7, 10) se faisant face présentent sensiblement la même surface d'ouverture.

7. Véhicule de combat selon l'une quelconque des revendications précédentes, **caractérisé en ce que** dans le cas d'un générateur d'air de refroidissement (10) solidaire de la tourelle, la répartition de l'air du bac (5) comporte un dispositif actif d'aspiration d'air (9) et dans le cas d'un générateur d'air de refroidissement (10) solidaire du bac, la répartition de l'air de la tourelle (4) comporte un dispositif actif d'aspiration d'air (9).

8. Véhicule de combat selon l'une quelconque des revendications précédentes, **caractérisé en ce que** la position de rotation de transfert représente la position indexée de la tourelle (2) dans laquelle en particulier le canon (21) est orienté parallèlement à la direction de marche du véhicule (F).

9. Véhicule de combat selon l'une quelconque des revendications précédentes, **caractérisé en ce que** la répartition de l'air de la tourelle (4) comporte au moins un orifice de sortie (18, 19, 26) au moyen duquel l'air de refroidissement peut être amené dans la partie supérieure de la tourelle de bouches à feu (2).

10. Véhicule de combat selon l'une quelconque des revendications précédentes, **caractérisé en ce que** la tourelle (2) comporte au moins un panier de tourelle (25), la répartition de l'air de la tourelle (4) présentant au moins un orifice de sortie (18, 19, 26) au moyen duquel l'air de refroidissement peut être amené dans la partie supérieure du panier de tourelle (25).

11. Véhicule de combat selon l'une quelconque des revendications précédentes, **caractérisé en ce qu'**au moyen de la répartition de l'air de la tourelle (4), l'air de refroidissement peut être acheminé à au moins deux emplacements dans la tourelle (2), en particulier au moyen d'une pièce tubulaire en Y.

12. Véhicule de combat selon l'une quelconque des revendications précédentes, **caractérisé en ce que** la répartition de l'air du bac (5) et/ou la répartition de l'air de la tourelle (4) comporte des gaines d'air (8, 15, 16), en particulier des tuyaux flexibles et/ou des tuyaux rigides.
